Europäisches Patentamt

European Patent Office

Office européen des brevets

(11) Publication number: **0 059 053**
**A2**

# (12) EUROPEAN PATENT APPLICATION

(21) Application number: 82300736.4

(51) Int. Cl.³: **H 05 B 41/24**

(22) Date of filing: 15.02.82

(30) Priority: 21.02.81 GB 8105552

(43) Date of publication of application: 01.09.82
Bulletin 82/35

(84) Designated Contracting States: DE FR GB NL SE

(71) Applicant: THORN EMI plc, THORN EMI House Upper
Saint Martin's Lane, London, WC2H 9ED (GB)

(72) Inventor: Webster, Stephen Paul, 128 Montagu Road,
Edmonton, N18 2NS (GB)

(74) Representative: Marsh, Robin Geoffrey et al, Thorn EMI
Patents Limited The Quadrangle Westmount Centre
Uxbridge Road, Hayes Middlesex, UB4 0HB (GB)

(54) Switched mode power supply.

(57) Switched mode power supplies have been disclosed for powering discharge lamps and other loads. In one example the line current is shaped, in response to a signal representing the load, or optionally the input, current to provide a suitably high power factor. The circuit, however, includes a switch breaking the input path which is found to be disadvantageous. The invention provides a switching means (CT1) connected across the circuit to control the current without breaking the current path. A current sensing resistor (R1) in the input path senses the current and a potentiometer (6) senses the potential from the rectifier (1). These are compared in a comparator with hysteresis (7) the output of which controls the switching means (VT1). An FET (FET1) connected across part of potentiometer (6) varies the attenuation ratio thereof to maintain the output voltage constant.

: 1 :

SWITCHED MODE POWER SUPPLY

The present invention relates to a switched mode power supply and especially, but not exclusively, a switched mode. power supply for discharge lamps and in particular fluorescent lamps.

In general it has been the practice to operate discharge lamps, including fluorescent lamps and high pressure discharge lamps, using electromagnetic ballasts. There has, however, been increasing interest in providing circuits for powering these lamps which use electronic techniques, such circuits including the power supply generally known as a switched mode power supply. These power supplies are, of course, not restricted to powering discharge lamps, being applicable to other suitable loads.

In devising appropriate circuits attention has been paid to considerations such as shaping the line current to provide a suitably high power factor. A power supply of this type is described for a discharge lamp ballast and for a general purpose power supply respectively, in British Patents Nos. 1 496 129 and 1 496 130. The circuit comprises a full wave rectifier, providing unidirectional current from an alternating supply and a chopper circuit supplying load current through a coasting inductor. A current sensor is coupled to sense the load current or optionally the input current and produce a signal indicative thereof. A control circuit provides a reference signal of suitable wave shape to determine the power level and the chopper circuit is controlled thereby to shape the load current to achieve a high power factor.

This is in many respects a useful circuit particularly in terms of achieving the desired power factor. However it suffers from the disadvantage that the switch breaks the input current path potentially causing switching harmonics which can be fed back to the AC supply. It also requires considerable filtering to attenuate the high frequency ripple.

It is an object of this invention to provide a power supply for which these disadvantages are alleviated.

According to the invention, there is provided a switch mode power supply operative on input unidirectional current derived by a full-wave rectifier from an alternating supply to provide an output unidirectional current to a D.C. load, the power supply including switching means; control means controlling the switching means to render it successively conductive and non-conductive to maintain the instantaneous magnitude of the unidirectional current within a predetermined range of the instantaneous magnitude of a reference signal which is a predetermined function of at least the alternating supply characterised in that the unidirectional current is supplied to a capacitance connected across the output of the supply via a series arrangement of an inductor and a device which is rendered conductive alternately with the switching means, the switching means being connected across the device and the capacitance to control the current supplied to the load without breaking the current path.

According to another aspect of the invention there is provided a switched mode power supply, operative on unidirectional current derived by a full wave rectifier from an alternating supply, to provide a unidirectional output current to a load, the power supply including a converter circuit and control means responsive to the load or input current to generate a reference signal to control the converter circuit so that the phase difference between the input current and input voltage is maintained within predetermined limits characterised in that the converter comprises a step-up voltage converter which does not break the input current path.

In an embodiment of the power supply, the reference signal represents a desired full wave rectified alternating current which is in phase with the alternating supply. The embodiment of the power supply is arranged to produce unidirectional voltage of constant magnitude at the output.

In a development of the embodiment, means are provided to sense the magnitude of the unidirectional voltage at the output and to vary the reference signal to maintain the unidirectional voltage substantially constant irrespective of variations of the alternating supply (provided the variations are within reasonable limits).

For a better understanding of the invention, and to show how it may be carried into effect, reference will now be made by way of example to the accompanying drawing in which

Figure 1 is a schematic circuit diagram of a switched mode power supply in accordance with the invention,

Figure 2 is a schematic waveform diagram illustrating the operation of the power supply,

Figure 3 is a detailed circuit diagram of a practical circuit, and

Figure 4 comprises waveform diagrams explaining the operation of the drive circuit of the circuit of Figure 3.

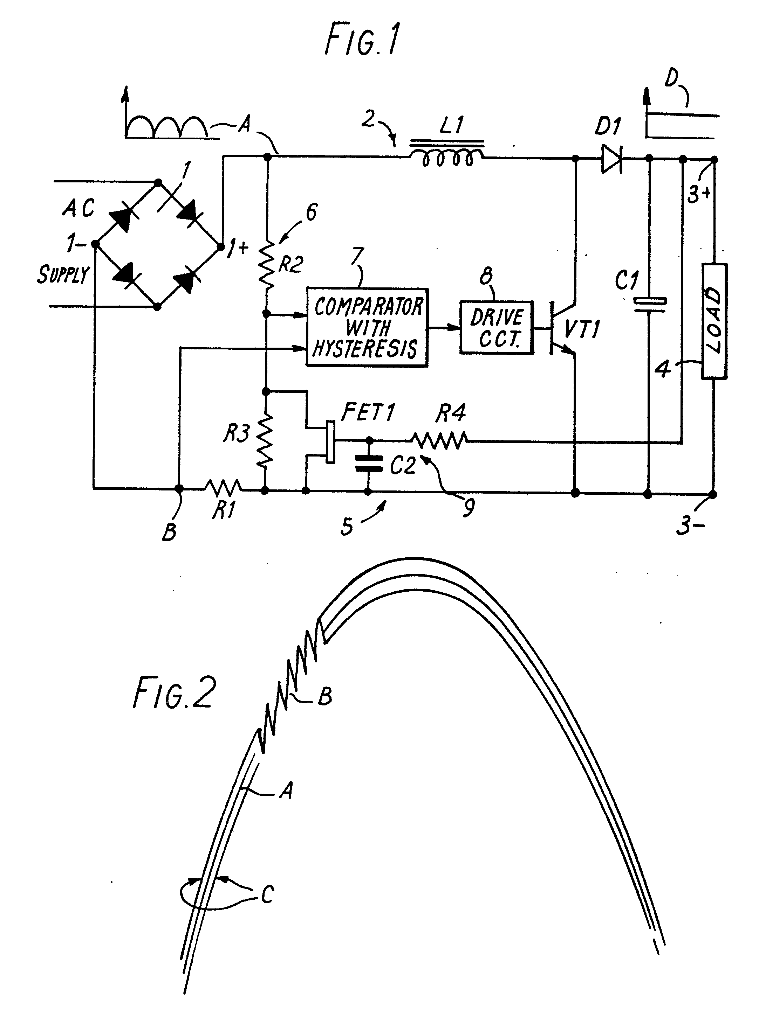

The example of the switched mode power supply shown in Figure 1 is arranged to produce a constant D.C. output (subject to some ripple) as indicated by the waveform diagram at point D, and is also arranged to maintain the power factor of energy drawn from the A.C. supply substantially at unity.

The power supply comprises a positive path 2 from the positive terminal 1+ of the rectifier 1 to the positive side 3+ of the output across which a load 4 is connected, and a negative path 5 from the negative side 3- of the output to the negative terminal 1- of the rectifier. The path 2 includes a series arrangement of an inductor L1 and a diode D1. A capacitor C1 is connected to paths 2 and 5 across the output from terminals

: 4 :

0059053

3+ to 3- and a switching transistor VT1 is connected across the diode D1 and the capacitor C1.

The circuit as so far described, operates in the following manner. Assuming transistor VT1 is rendered conductive, so that an increasing current drawn from the rectifier flows through inductor L1, this stores energy in the inductor and the potential across the inductor opposes the potential of the rectifier. Whilst transistor VT1 is conductive, diode D1 is non-conductive. If the transistor VT1 is rendered non-conductive, diode D1 becomes conductive and the current established in L1 continues to flow through it, and the potential across the inductor L1 reverses so that the potential at the junction of the inductor, diode and transistor becomes greater than the potential of the rectifier 1. The current flowing, however, decreases as the energy stored in the inductor L1 is released.

In order to provide unity power factor, the power supply not only maintains supply current of the correct phase relationship, but actually attempts to replicate the mains waveform exactly, that is a sinusoidal mains voltage will produce a sinusoidal current. This avoids harmonic distortion. To do this the power supply has the following additions.

A potentiometer 6 comprising a series arrangement of resistors R2 and R3 is connected between the paths 2 and 5 to sense the potential supplied by the rectifier 1, and a current sensing resistor R1 is connected in path 5 between the transistor VT1 and the rectifier 1 to sense the input current. A comparator 7 with hysteresis is connected to compare the potential across the input current sensing resistor R1 with the potential at the centre tap of the potentiometer and controls the transistor VT1, via a drive circuit 8, in dependence upon the comparison.

The manner of operation is as follows, referring to Figure 2, and assuming a sinusoidal supply.

The potentiometer 6 produces a full-wave rectified sinusoidal signal one half wave of which is shown at A in Figure 2 and which represents the desired phase and variation of the input current.   The signal A is, of course, in-phase with the alternating voltage.   The comparator 7 with hysteresis defines upper and lower bounds C for the variation of the actual input current.   The actual input current, as shown at B, actually varies sinusoidally with a high frequency sawtooth modulation due to the switching action of the transistor VT1.

Assuming the actual input current is initially less than the desired current, the comparator 7 causes the transistor to conduct until the magnitude of the current reaches the upper bound C.   The transistor is then rendered non conductive until the current reduces to a magnitude equal to the lower bound C, whereupon the transistor conducts again.   In this way the input current is forced to follow the reference signal and be in-phase with the alternating supply voltage.

The circuit provides a substantially constant direct output voltage because it maintains the charge on the capacitor C1 at a constant level, with a small magnitude 100Hz ripple on the direct voltage, the capacitor C1 being chosen to provide the constant voltage for a known range of load variation.   This assumes, however, that the alternating supply voltage is constant.   In order to maintain the output constant independently of variations (within reasonable limits) in the alternating supply voltage a circuit 9 is provided to monitor the voltage across the output (3+, 3-) and vary the attenuation ratio of the potentiometer 6 such that the input amplitude of current is varied to maintain the output voltage constant.   The circuit 9 comprises a field effect transistor FET1 the controlled path of which is connected in parallel with resistor R3, and the gate of which is connected to output terminal 3+ via a filter circuit C2, R4 to make the response time of the circuit 9 long in comparison with the period of the A.C. supply to avoid distortion of the input current waveform.

The above described example of the switched mode power supply acts as a unity power factor load on the supply.

Because the converter part of the power supply is a step-up type converter, in which the transistor VT1 is connected between paths 2 and 5, and is not in either path, the current drawn from the A.C. supply is not chopped by it, but is continuous, thus reducing the switching harmonics which could be fed back to the A.C. supply. The continuous, rather than intermittent, flow of current through the inductor L1 allows a reduction in peak flux (and thus in size) of the inductor compared to switched mode power supplies employing converters in which current flow is intermittent. The control of the magnitude of the current provided by the example protects VT1 against the effects of core saturation. Most pulse width modulation techniques would require additional circuitry to protect the switching transistor against over-current condition in the event of inductor core saturation. With the technique described here this function is automatic and normal circuit operation may actually continue even though the inductor is saturating slightly.

The example protects both the load and VT1 from transients borne by the A.C. supply because when transistor VT1 is conductive the load is isolated from the supply and inductor L1 provides an integrating action, and when transistor VT1 is non-conductive, inductor L1 and capacitor C1 act as a filter, the collector-emitter potential of VT1 is clamped at the potential of C1 when VT1 is non conducting.

The transistor VT1 handles only a portion of the total input current.

Various modifications to the described schematic example could be made.

For example, the transistor VT1 could be replaced by any other suitable switching device. Similarly the diode D1 could be replaced by a controlled switch, although that would increase the complexity of the circuit.

The input current sensing resistor R1 could be replaced by for example a current transformer. Furthermore, it could be placed in path 2 to sense the input current.

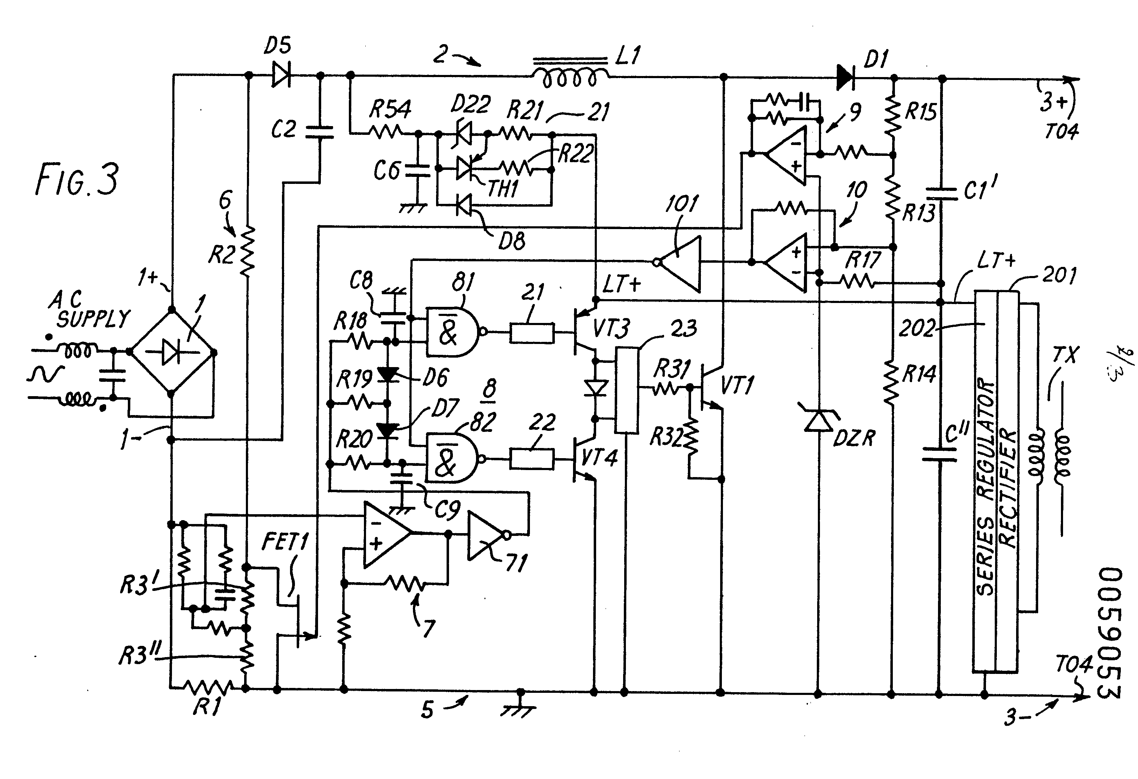

Figure 3 shows a practical example of the switched-mode- power supply of the invention. In it, items equivalent to similar items of Figure 1 have the same reference numerals as in Figure 1.

Thus, the practical example comprises a full wave rectifier 1 which derives full wave rectified half waves from an A.C. supply. A positive path 2 including the inductor L1 and diode D1 extends from positive terminal 1+ of the rectifier to the positive terminal 3+ of the output. A negative path 5 extends from negative terminal 1- to negative terminal 3-. A series arrangement of capacitors C1' and C1" is connected across the output 3+, 3-, and a switching transistor VT1 is connected across diode D1 and the capacitors C1' and C1".

A current sensing resistor R1 is connected in path 5 (or path 2) to sense the input current, whilst an input potentiometer or potential divider 6 comprising a series arrangement of resistors R2, R3' and R3" is connected across the rectifier to sense the full wave rectified input voltage.

A comparator with hysteresis 7 compares the sensed input current with the sensed input voltage and switches transistor VT1 via a drive circuit 8 to maintain unity power factor as described hereinbefore. In this example, the comparator 7 comprises an operational amplifier with positive feedback coupled to the drive circuit 8 via an inverter 71.

A field effect transistor FET1, connected across resistors R3', R3" of the input voltage sensing potentiometer 6, varies the attentuation ratio of the potentiometer 6 to maintain the output voltage constant. The transistor FET1 is controlled by an operational amplifier, connected as a filter circuit 9, and which compares a proportion of the output voltage as sensed by an output potentiometer R15, R14, R13 connected across the output 3+, 3- with a reference voltage defined by a Zener diode DZR, connected in series with a current limiting resistor R17 across capacitor C1".

An over-voltage protection circuit 10 comprising an operational amplifier with positive feedback which compares the reference voltage set by Zener diode DZR with a proportion of the output voltage sensed by the output potentiometer R13, R14, R15, controls the transistor VT1 via an inverter 101 and the drive circuit 8 to prevent the output voltage exceeding a limit defined by the Zener diode DZR.

The example shown in Figure 3 is intended to act as D.C. power supply for an inverter and the D.C. low tension (LT) supply for the active circuits (such as operational amplifies and logic gates) and for the drive circuit 8 of the power supply of Figure 3 is derived by a transformer circuit TX, and rectifier and series regulator circuits 201 and 202.

The drive circuit 8 comprises a series arrangement of an N-P-N transistor VT4 and a P-N-P transistor VT3 for controlling switching transistor VT1, the base of which is coupled to the junction of transistors VT3 and VT4 by a coupling network 23. The transistors VT3 and VT4 are connected between the positive line LT+ of the LT supply and the negative path 5.

The drive circuit is arranged to ensure that transistors VT3 and VT4 are never simultaneously conductive to stop large (crowbar) currents flowing through them. The drive circuit also turns off transistor VT1 in two stages: firstly the base drive current is removed from VT1 to allow stored charged to flow out through the emitter and then a turn off potential is applied to its base to ensure VT1 turns off. The drive circuit also responds to the overvoltage circuit 10, 101 to turn off transistor VT1.

The circuit 10 comprises an input from inverter 71 to which resistors R18, R19 and R20 are connected in parallel. A capacitor C8 is connected between R18 and ground (path 5) and a capacitor C9 is connected between R20 and ground. The capacitors C8 and C9 are of equal value, and resistors R18 and R20 are of equal value. A diode D6 is connected between R18, C8 and R19, and a diode D7 is connected between R19 and R20, C9 as shown. The resistor R19 has a smaller resistance than R18 or R20.

NAND gates 81 and 82 have first inputs connected to capacitors C8 and C9 respectively, and second inputs commonly connected to the over-voltage protection circuit 10 via inverter
101.    Their outputs are coupled to the bases of transistors VT3
and VT4 by coupling circuits 24 and 22 respectively.

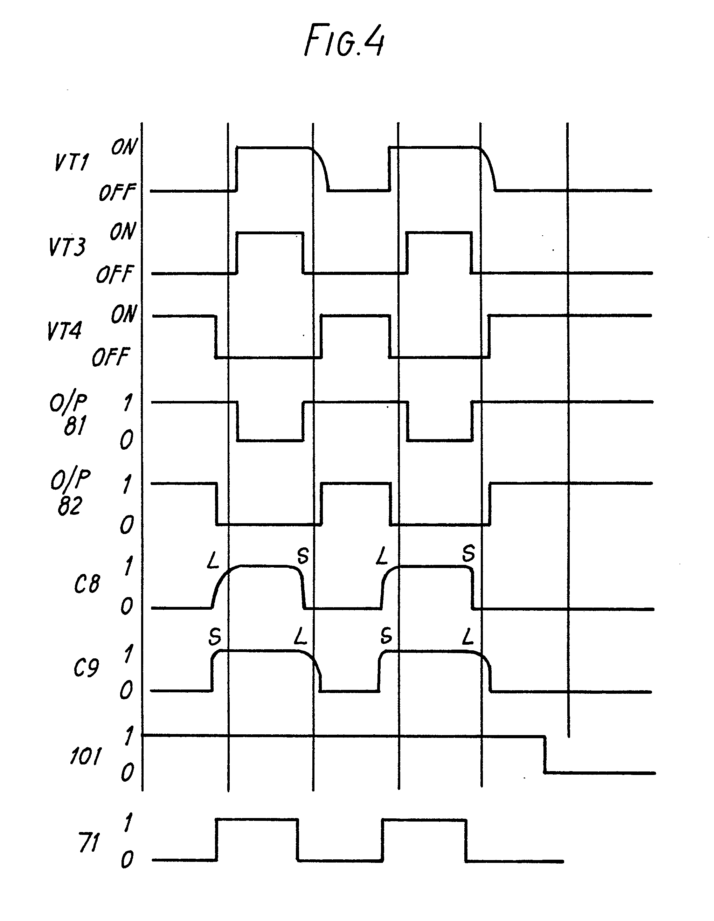

Referring to Figure 4 assuming there is no overvoltage the
output of inverter 101 is logical '1' when the output of
inverter 71 is logical '0', the outputs of both NAND gates are
logical '1', transistor VT3 is off, VT4 is on, and transistor
VT1 is off.    When the output of inverter is logical '1' the
outputs of both NAND gates are '0', VT3 is on, VT4 is off and
VT1 is on.

When the output of inverter 71 changes from '0' to '1'
capacitor C9 charges quickly from '0' to '1' via R19 and D7 (a
path of lower resistance than R18 or R20) whilst capacitor C8
changes relatively slowly via R18 with D6 off.    Thus transistor
VT4 turns off before VT3 turns on.    Transistor VT1 turns on
with VT3.

When the output of inverter changes from '1' to '0'
capacitor C9 discharges slowly via R20 with D7 off, whilst
capacitor C8 discharges relatively quickly via D6 and R19.
Thus transistor VT3 turns off before VT4 turns on.    As VT3
turns off it removes the base drive current to transistor VT1
and charge stored in VT1 flows out of its emitter.    Then when
VT4 turns on, reverse potential is applied to the base of VT1
turning VT1 off in a positive manner, by network 23.

If the circuit 10 indicates an overvoltage, inverter 101
produces logical '0' at its output, and so VT1 remains off as
shown in Figure 4.

The circuit of Figure 3 includes a diode D5 connected
between terminal 1+ and positive rail 2 to block any potential
on rail 2 which is higher than the potential at 1+.    In this
way it is ensured that potentiometer 6 senses only the
alternating main voltage.    A capacitor C2 is connected across
D5 and the rectifier.    C2 forms part of the input filter
circuit and also ensures a low supply impedance for the
regulator at switching frequencies.

The circuit of Figure 3 has been described assuming the low tension supply TX, 201, 202 is operative.    At initial turn-on of the circuit, however, the LT supply does not operate.    Thus circuit 21 is provided to provide auxiliary power at turn-on.

Auxiliary power supply circuit 21 has an input coupled to the rectifier 1 via a smoothing circuit D5, C2, and an output connected to the LT+ supply line and thus to the emitter of transistor VT3.    At initial turn-on a Zener diode DZ2 eventually breaks down, as the potential on a capacitor C6 builds up, and fires a thyristor TH1, energising the LT+ supply line.    As the power supply and inverter (not shown) begin to operate, the LT supplied by TX and 201, 202 builds up sufficiently to turn-off thyristor TH1    For fluorescent ballasts in particular where 'instant' starting is required use is made of the switch on surge through C1', C1" (as controlled by L1) to energise the LT supply rail.    The pulse charges C1" rapidly to clamp on a zener diode arrangement in the regulator 202.    For discharge lighting in general this may not be required and the -ve terminal of C1' may be returned directly to 0v.    In this case start up is entirely left to network 21. Network 21 is a back up system for the circuit as shown.

What we claim is:-

1.      A switch mode power supply operative on input unidirectional current derived by a full-wave rectifier from an alternating supply to provide an output unidirectional current to a D.C. load, the power supply including switching means; control means controlling the switching means to render it successively conductive and non-conductive to maintain the instantaneous magnitude of the unidirectional current within a predetermined range of the instantaneous magnitude of a reference signal which is a predetermined function of at least the alternating supply characterised in that the unidirectional current is supplied to a capacitance connected across the output of the supply via a series arrangement of an inductor and a device which is rendered conductive alternately with the switching means, the switching means being connected across the device and the capacitance to control the current supplied to the load without breaking the current path.

2.      A power supply according to Claim 1 in which the reference signal is compared with the unidirectional current supplied by the full wave rectifier to maintain a power factor substantially at unity.

3.      A power supply according to either Claim 1 or Claim 2 in which means are provided to sense the magnitude of the unidirectional voltage at the output and to vary the reference signal to maintain the output voltage substantially constant irrespective of variation in the alternating supply.

4.      A switched mode power supply, operative on unidirectional current derived by a full wave rectifier from an alternating supply, to provide a unidirectional output current to a load, the power supply including a converter circuit and control means responsive to the load or input current to generate a reference signal to control the converter circuit so that the phase difference between the input current and input voltage is maintained within predetermined limits characterised in that the converter comprises a step-up voltage converter which does not break the input current path.

5.      A power supply according to Claim 4 in which the converter circuit is arranged to respond to the reference signal to match the waveform of the input current to the waveform of the input voltage within predetermined limits.

6.        A power supply according to Claim 4 or Claim 5 including
means responsive to the output voltage of the power supply arranged
to vary the reference signal to maintain the output voltage
substantially constant within operating limits on variations in the
alternating supply.

7.        A power supply according to any preceding claim including
an overvoltage protection circuit comprising means for comparing the
output voltage with a reference voltage to prevent the output
voltage exceeding said reference.

8.        A power supply according to any preceding claim arranged to
operate fluorescent or other discharge lamps and including means for
starting said lamps.

**FIG.1**

**FIG.2**

FIG.3

FIG.4

3/3

0059053